# EUROPÄISCHE PATENTANMELDUNG

(11) **EP 1 291 152 A1**
(43) Veröffentlichungstag der Anmeldung: **12.03.2003**
(21) Anmeldenummer: 02009664.0
(22) Anmeldetag: 29.04.2002
(51) Int. Cl.: B29C 47/90

(54) **Kalibrierhülse mit Intensivkühlung**

(30) Priorität: 30.04.2001 DE 20107440 U
(71) Anmelder: CONPRO GmbH, 32457 Porta Westfalica (DE)
(72) Erfinder: Neumann, Ulrich, 32549 Bad Oeynhausen (DE)
(74) Vertreter: Müller, Karl-Ernst, Dr., Dipl.-Ing.

(57) **Zusammenfassung**

Extrudieranlage für Kunststoffrohre, bestehend aus einem Extruder und einer daran anschließenden, in einem Vakuumtank angeordneten und mit einer Wasserkühlung versehenen Kalibrierhülse und mit einem in Einlaufrichtung des Kunststoffrohres in den Vakuumtank vor dem Vakuumtank angeordneten Vorsatz, der das Kunststoffrohr oder einen aus dem Vakuumtank hervorstehenden Abschnitt der Kalibrierhülse mit einer an eine Wasserzufuhr angeschlossenen Wasserkammer umschließt, ist dadurch gekennzeichnet, dass das über den Wasseranschluss (14, 19) des Vorsatzes (12, 18) in dessen Wasserkammer (13, 20) eingebrachte Wasser über wenigstens eine derart ausgebildete und angeordnete Umlenkdüse (15) eingeleitet wird, dass der aus der Umlenkdüse (15) austretende Wasserstrom in eine um das Kunststoffrohr oder die Kalibrierhülse (11) rotierende Strömung versetzt ist.

## Beschreibung

Die Erfindung betrifft eine Extrudieranlage bestehend aus einem Extruder und einer daran anschließenden, in einem Vakuumtank angeordneten und mit einer Wasserkühlung versehenen Kalibrierhülse und mit einem in Einlaufrichtung des Kunststoffrohres in den Vakuumtank vor dem Vakuumtank angeordneten Vorsatz, der das Kunststoffrohr oder einen aus dem Vakuumtank hervorstehenden Abschnitt der Kalibrierhülse mit einer an eine Wasserzufuhr angeschlossenen Wasserkammer umschließt.

Eine Extrudieranlage mit den vorgenannten Merkmalen ist in der DE 42 21 920 A1 beschrieben. Soweit bei der bekannten Extrudieranlage die Kalibrierhülse mit einem Abschnitt in Einlaufrichtung des Kunststoffrohres über den Vakuumtank hervorsteht, ist dieser Abschnitt von einer ihn umschließenden Vorsatzhülse umgeben. Zusätzlich zu der Aufnahme einer Wanddickenmessvorrichtung dient die Vorsatzhülse bei der bekannten Extrudieranlage insbesondere der Intensivkühlung des vorstehenden Kalibrierhülsenabschnitts, und hierzu weist die Vorsatzhülse einen Wasseranschluss und eine Wasserkammer zur Verteilung des zugeführten Wassers über den Abschnitt der Kalibrierhülse auf.

Das im Bereich des Vorsatzes auf das Kunststoffrohr aufgebrachte Wasser soll nicht nur eine Intensivkühlung des heißen Rohres bewirken, sondern auch für die Ausbildung eines sich zwischen dem Kunststoffrohr und der Innenseite der Kalibrierhülse einstellenden Schmierwasserfilms sorgen, der als Gleitmittel wirkt und beim weiteren Transport des Rohres durch die Kalibrierhülse die Reibung zwischen der Kalibrierhülse und dem Rohr reduziert. Soweit hierzu gewährleistet sein muss, dass im Bereich der Kalibrierhülse jeweils homogene Druck- und Strömungsverhältnisse herrschen, sind in der bekannten Vorsatzhülse Wirbelkammern ausgebildet, in denen das unter Druck zugeführte Wasser verwirbelt wird.

Mit der bekannten Extrudieranlage ist der Nachteil verbunden, dass die Wirbelkammern einerseits nicht den gewünschten Erfolg haben und daher im Bereich des Kontaktes zwischen der Kalibrierhülse und dem Kunststoffrohr stärkere Wasseransammlungen entstehen, die insbesondere im Hinblick auf die Ausbildung des gewünschten Schmierwasserfilms störend sind. Andererseits sind die Kalibrierhülsen mit den zugehörigen Vorsätzen und darin vorgesehenen Einbauten für die Wasserverteilung aufwendig und teuer.

Der Erfindung liegt daher die Aufgabe zugrunde, bei einer Extrudieranlage mit den gattungsgemäßen Merkmalen die in dem Vorsatz erzeugte Kühlwirkung durch das zugeführte Wasser zu verbessern und die Ausbildung eines Schmierfilmes auf der Rohroberfläche sicherzustellen.

Die Lösung dieser Aufgabe ergibt sich einschließlich vorteilhafter Ausgestaltungen und Weiterbildungen aus dem Inhalt der Patentansprüche, welche dieser Beschreibung nachgestellt sind.

Die Erfindung sieht in ihrem Grundgedanken vor, dass das über den Wasseranschluss des Vorsatzes in dessen Wasserkammer eingebrachte Wasser über wenigstens eine derart ausgebildete und angeordnete Umlenkdüse eingeleitet wird, dass der aus der Umlenkdüse austretende Wasserstrom in eine um das Kunststoffrohr oder die Kalibrierhülse rotierende Strömung versetzt ist. Mit der Erfindung ist der Vorteil verbunden, dass die aufgrund der Anordnung der Umlenkdüsen entstehenden Zentripedalkräfte für eine gleichmäßige Wasserströmung in der zugeordneten Wasserkammer sorgen, so dass eine gleichmäßige Benetzung und Kühlwirkung gegeben ist. Die Kalibrierhülsen mit den erfindungsgemäß ausgebildeten Vorsätzen sind weiterhin einfach aufgebaut und daher kostengünstig herzustellen.

Nach einem Ausführungsbeispiel der Erfindung ist vorgesehen, dass die Umlenkdüse in einem eine spiralförmige Strömung des aus der Umlenkdüse austretenden Wassers um das Kunststoffrohr oder die Kalibrierhülse einstellenden Winkel gegen die Längsachse der Kalibrierhülse angeordnet ist. Hiermit ist eine weitere Vergleichmäßigung der Wasserströmung gegeben.

Nach einem Ausführungsbeispiel der Erfindung kann vorgesehen sein, dass die Umlenkdüsen in dem jeweiligen Vorsatz verstellbar angeordnet sind, so dass auch Anpassungen an betriebliche Verhältnisse möglich sind. Dabei kann vorgesehen sein, dass über den Umfang des Vorsatzes verteilt mehrere Umlenkdüsen angeordnet sind.

In einer ersten Ausführungsform der Erfindung ist vorgesehen, dass der Vorsatz mit Umlenkdüse als ein das Kunststoffrohr oder den vor dem Vakuumtank hervorstehenden Abschnitt der Kalibrierhülse umschließender Intensivkühlring in Form einer die Wasserkammer mit der darin angeordneten Umlenkdüse aufweisenden Vorsatzhülse ausgebildet ist. In dieser Ausbildung ersetzt der erfindungsgemäße Vorsatz die im Stand der Technik bekannte Intensivkühlung der Kalibrierhülse. Hierbei kann gleichzeitig vorgesehen sein, dass der Vorsatz auch bei Fehlen eines über den Vakuumtank hervorstehenden Abschnitts der Kalibrierhülse unmittelbar das in den Vakuumtank einlaufende Kunststoffrohr kühlt.

Soweit bei klebenden Materialien die Fläche der Kalibrierhülse, die zuerst mit dem extrudierten Kunststoffrohr in Kontakt kommt, im Wege einer sogenannten Gleitkühlung mit Wasser benetzt werden soll, ist nach einem Ausführungsbeispiel der Erfindung vorgesehen, dass der Vorsatz mit Umlenkdüse in Einlaufrichtung des Kunststoffrohres vor der Kalibrierhülse angeordnet und derart ausgebildet ist, dass die zuerst in Kontakt mit dem Kunststoff kommende Fläche der Kalibrierhülse durch das aus der Wasserkammer des Vorsatzes austretende Wasser als Gleitkühlung benetzt wird.

Soweit eine derartige Gleitkühlung zusätzlich zu einer dem Vakuumtank vorgeschalteten Intensivkühlung erfolgen soll, ist nach einem Ausführungsbeispiel der Erfindung vorgesehen, dass der Vorsatz als Vorsatzring ausgebildet und stirnseitig an dem Intensivkühlring festlegbar ist, wobei durch die Stellung des Vorsatzringes zur Stirnseite des Intensivkühlringes der Spalt für den Durchtritt des für die Gleitkühlung der Kalibrierhülse benötigten Wassers einstellbar ist. Bei dieser Ausführungsform kann der Intensivkühlring in herkömmlicher Weise ausgebildet sein, wie beispielsweise in der zur Bildung der Gattung herangezogenen DE 42 21 920 A1 beschrieben.

Nach einem Ausführungsbeispiel der Erfindung ist es zweckmäßig sowohl die Intensivkühlung als auch die vorgeschaltete Gleitkühlung in einem einzigen Vorsatz zusammenzufassen, und hierzu ist vorgesehen, dass der Vorsatz sowohl eine die Kalibrierhülse umschließende Wasserkammer für die Intensivkühlung als auch eine in Einlaufrichtung des Kunststoffrohres vor der Kalibrierhülse angeordnete Wasserkammer für die Gleitkühlung mit jeweils darin angeordneten Umlenkdüsen aufweist.

Auch bei diesem Ausführungsbeispiel der Erfindung kann vorgesehen sein, dass für die Intensivkühlung und die Gleitkühlung getrennte Bereiche in dem Vorsatz ausgebildet sind, indem der Vorsatz aus einer die die Kalibrierhülse umschließende Wasserkammer aufweisenden Vorsatzhülse und aus einem stirnseitig auf die Vorsatzhülse aufschraubbaren Vorsatzring besteht, wobei durch die Stellung des Vorsatzringes zur Stirnseite der Vorsatzhülse der Spalt für den Durchtritt des für die Gleitkühlung der Kalibrierhülse benötigten Wassers einstellbar ist.

Insofern können die erfindungsgemäße Kühlungs- und Benetzungsart und bekannte Kühlungs- und Benetzungsarten unabhängig voneinander benutzt werden, indem konventionelle Kühlungen jeweils mit einer erfindungsgemäß ausgebildeten Kühlung kombiniert werden.

In der Zeichnung ist ein Ausführungsbeispiel der Erfindung wiedergegeben, welches nachstehend beschrieben ist. Es zeigen:
- Fig. 1:: Einen außerhalb des Vakuumtank liegenden Abschnitt einer Kalibrierhülse mit Vorsatz in einer geschnittenen Seitenansicht,
- Fig. 2:: eine Umlenkdüse in einer Einzeldarstellung,
- Fig. 3:: den Gegenstand der Figur 1 in einer Stirnansicht in einer schematischen Darstellung der eingerichteten Strömung.

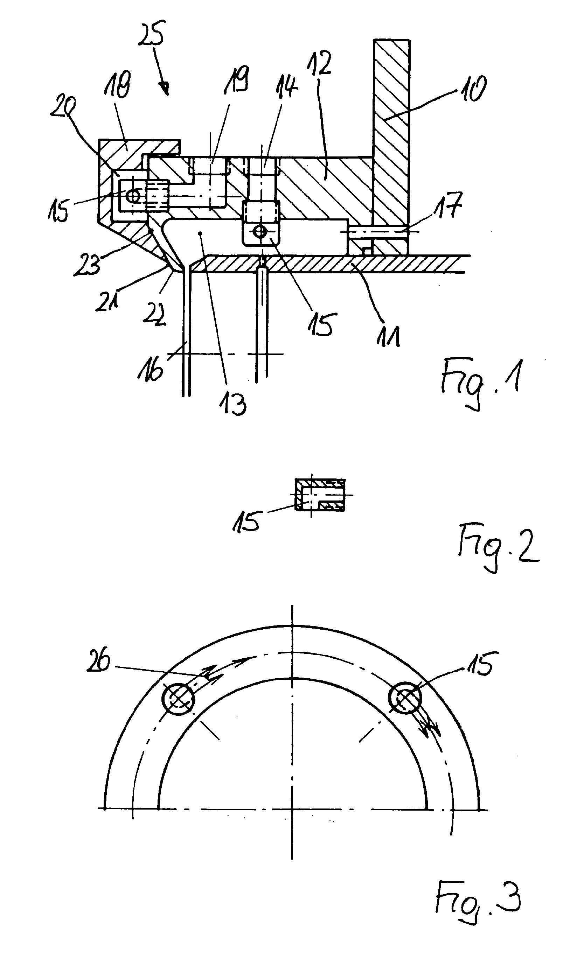

Entsprechend Figur 1 ist die Stirnseite eines Vakuumtanks 10 dargestellt, in welchem eine Kalibrierhülse 11 angeordnet ist, die mit einem Abschnitt über den Vakuumtank 10 hervorsteht. An den Vakuumtank 10 ist eine Vorsatzhülse 12 angeschlossen, in der eine den hervorstehenden Abschnitt der Kalibrierhülse 11 umschließende Wasserkammer 13 angeordnet ist, in die wenigstens ein Wasseranschluss 14 führt. Der Wasseranschluss 14 mündet in eine in der Wasserkammer 13 der Vorsatzhülse 12 angeordnete Umlenkdüse 15, die im einzelnen in Figur 2 dargestellt ist. Mittels der Umlenkdüse 15 wird der über den Wasseranschluss 14 in die Wasserkammer 13 eingeleitete Wasserstrom in eine um die Kalibrierhülse 11 rotierende Strömungsrichtung geleitet, wie dies schematisch in Figur 3 mit dem Pfeil 26 bezeichnet ist. Die Wasserkammer 13 ist über eine Verbindungsbohrung 17 mit dem Inneren der Vakuumtanks 10 verbunden, so dass das in die Wasserkammer 13 eingeleitete Wasser in den Vakuumtank 10 abströmen kann und gleichzeitig das im Vakuumtank 10 herrschende Vakuum auch für die Wasserkammer 13 gilt.

Die Vorsatzhülse 12 reicht bis über die vordere Stirnseite der Kalibrierhülse 11 und bildet hier mit einer Einlauffläche 21 einen Spalt 16, über den Wasser aus der Wasserkammer 13 an die Oberfläche des durch die Kalibrierhülse 11 laufenden und nicht dargestellten Kunststoffrohres gelangen kann und hier einen Schmierwasserfilm zwischen der Oberfläche des Kunststoffrohres und dem Innenumfang der Kalibrierhülse 11 ausbildet. Hierdurch wird beim Vorschub des Kunststoffrohres durch die Kalibrierhülse 11 die auftretende Reibung vermindert.

Stirnseitig ist auf der Vorsatzhülse 12 ein Vorsatzring 18 angeordnet, der eine eigene Wasserkammer 20 aufweist, in welcher ebenfalls eine an einen Wasseranschluss 19 angeschlossene Umlenkdüse 15 angeordnet ist, für die die gleichen Strömungsverhältnisse gelten wie für die Wasserkammer 13 der Vorsatzhülse 12 beschrieben. Der Vorsatzring 18 bildet mit der Stirnseite der Vorsatzhülse 12 einen Spalt 23, über den das für die Benetzung der mit einem Radius 22 ausgeführten Einlauffläche 21 erforderliche Wasser zugeführt wird und hier eine Gleitkühlung ausbildet.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

## Patentansprüche

1. Extrudieranlage für Kunststoffrohre, bestehend aus einem Extruder und einer daran anschließenden, in einem Vakuumtank angeordneten und mit einer Wasserkühlung versehenen Kalibrierhülse und mit einem in Einlaufrichtung des Kunststoffrohres in den Vakuumtank vor dem Vakuumtank angeordneten Vorsatz, der das Kunststoffrohr oder einen aus dem Vakuumtank hervorstehenden Abschnitt der Kalibrierhülse mit einer an eine Wasserzufuhr angeschlossenen Wasserkammer umschließt, **dadurch gekennzeichnet, dass** das über den Wasseranschluss (14, 19) des Vorsatzes (12, 18) in dessen Wasserkammer (13, 20) eingebrachte Wasser über wenigstens eine derart ausgebildete und angeordnete Umlenkdüse (15) eingeleitet wird, dass der aus der Umlenkdüse (15) austretende Wasserstrom in eine um das Kunststoffrohr oder die Kalibrierhülse (11) rotierende Strömung versetzt ist.

2. Extrudieranlage nach Anspruch 1, **dadurch gekennzeichnet, dass** die Umlenkdüse (15) in einem eine spiralförmige Strömung des aus der Umlenkdüse (15) austretenden Wassers um das Kunststoffrohr oder die Kalibrierhülse (11) einstellenden Winkel gegen die Längsachse der Kalibrierhülse (11) angeordnet ist.

3. Extrudieranlage nach Anspruch 1 oder 2, **dadurch gekennzeichnet, dass** die Umlenkdüse (15) in dem Vorsatz (12, 18) verstellbar angeordnet ist.

4. Extrudieranlage nach einem der Ansprüche 1 bis 3, **dadurch gekennzeichnet, dass** über den Umfang des Vorsatzes (12, 18) verteilt mehrere Umlenkdüsen (15) angeordnet sind.

5. Extrudieranlage nach einem der Ansprüche 1 bis 4, **dadurch gekennzeichnet, dass** der Vorsatz mit Umlenkdüse (15) als ein das Kunststoffrohr oder den vor dem Vakuumtank (10) hervorstehenden Abschnitt der Kalibrierhülse (11) umschließender Intensivkühlring (Vorsatzhülse 12) ausgebildet ist.

6. Extrudieranlage nach einem der Ansprüche 1 bis 5, **dadurch gekennzeichnet, dass** der Vorsatz mit Umlenkdüse (15) in Einlaufrichtung des Kunststoffrohres vor der Kalibrierhülse (11) angeordnet und derart ausgebildet ist, dass die zuerst in Kontakt mit dem Kunststoff kommende Fläche der Kalibrierhülse (11) durch das aus der Wasserkammer (20) des Vorsatzes austretende Wasser als Gleitkühlung benetzt wird.

7. Extrudieranlage nach Anspruch 6 mit einem das Kunststoffrohr oder die Kalibrierhülse (11) umschließenden und mit einer Wasserkühlung versehenen Intensivkühlring, **dadurch gekennzeichnet, dass** der Vorsatz als Vorsatzring (18) ausgebildet und stirnseitig an dem Intensivkühlring festlegbar ist, wobei durch die Stellung des Vorsatzringes (18) zur Stirnseite des Intensivkühlringes der Spalt für den Durchtritt des für die Gleitkühlung der Kalibrierhülse (11) benötigten Wassers einstellbar ist.

8. Extrudieranlage nach Anspruch 5 und 6, **dadurch gekennzeichnet, dass** der Vorsatz sowohl eine die Kalibrierhülse (11) umschließende Wasserkammer (13) für die Intensivkühlung als auch eine in Einlaufrichtung des Kunststoffrohres vor der Kalibrierhülse (11) angeordnete Wasserkammer (20)für die Gleitkühlung mit jeweils darin angeordneten Umlenkdüsen (15) aufweist.

9. Extrudieranlage nach Anspruch 8, **dadurch gekennzeichnet, dass** der Vorsatz aus einer die die Kalibrierhülse (11) umschließende Wasserkammer (13) aufweisenden Vorsatzhülse (12) und aus einem stirnseitig auf die Vorsatzhülse (12) aufschraubbaren Vorsatzring (18) besteht, wobei durch die Stellung des Vorsatzringes (18) zur Stirnseite der Vorsatzhülse (12) der Spalt für den Durchtritt des für die Gleitkühlung der Kalibrierhülse (11) benötigten Wassers einstellbar ist.
